# EUROPEAN PATENT SPECIFICATION

(11) **EP 3 061 996 B1**
(45) Date of publication and mention of the grant of the patent: **04.04.2018**
(21) Application number: 14856153.3
(22) Date of filing: 24.09.2014
(51) Int. Cl.: F16H 61/04, B60W 10/04, B60W 10/101, B60W 10/11, F02D 29/00, F16H 61/662, F16H 63/50

(54) **CONTROL DEVICE FOR CONTINUOUSLY VARIABLE TRANSMISSION**
STEUERUNGSVORRICHTUNG FÜR EIN STUFENLOSES GETRIEBE
DISPOSITIF DE COMMANDE POUR TRANSMISSION À VARIATION CONTINUE

(30) Priority: 23.10.2013 JP 2013220423
(43) Date of publication of application: 31.08.2016
(73) Proprietor: Jatco Ltd, Fuji-shi, Shizuoka 417-8585 (JP); NISSAN MOTOR CO., LTD., Yokohama-shi, Kanagawa 221-0023 (JP)
(72) Inventor: TAKAHASHI, Seiichiro, Fuji-shi Shizuoka 417-8585 (JP); INOUE, Takuichiro, Fuji-shi Shizuoka 417-8585 (JP); TAGAMI, Koutarou, Fuji-shi Shizuoka 417-8585 (JP); SHINOHARA, Fumito, Fuji-shi Shizuoka 417-8585 (JP); SUZUKI, Hiroyuki, Fuji-shi Shizuoka 417-8585 (JP); OKAMOTO, Yuji, Fuji-shi Shizuoka 417-8585 (JP); NOBUKAWA, Takashi, Fuji-shi Shizuoka 417-8585 (JP)
(74) Representative: Grünecker Patent- und Rechtsanwälte PartG mbB
(86) International application number: PCT/JP2014/075173
(87) International publication number: WO 2015/060051

(56) References cited:
- JP-A- H0 579 554
- JP-A- H03 229 933
- JP-A- H05 322 015
- JP-A- H06 174 069
- JP-A- 2007 092 665
- JP-A- 2007 092 665
- JP-B2- 4 914 467

## Description

### Technical Field:

The present invention relates to a control device for a continuously variable transmission (which will be referred to as a CVT with an auxiliary transmission in the following) that is equipped with both a belt type continuously variable transmission mechanism and a stepped variable transmission mechanism.

### Background Art:

Hitherto, in a CVT with an auxiliary transmission, for effecting a speed change in the auxiliary transmission mechanism, a so-called coordinated speed change has been carried out wherein the continuously variable transmission mechanism (which will be referred to as a variator in the following) is speed-changed in a direction opposite to that of the auxiliary transmission mechanism, so that reduction of shift shock of the auxiliary transmission mechanism is obtained (which is disclosed in for example Patent Document-1 and Patent Document-2). In Patent Document-2, there is described a continuously variable transmission in which the speed change of an auxiliary transmission mechanism consists of four phases, viz., a preparatory phase, a torque phase, an inertia phase and an ending phase. In this technology, at the inertia phase, the speed change ratio of the varlator and that of the auxiliary transmission mechanism are controlled in mutually opposite directions for carrying out the coordinated speed change.

However, even when the above-mentioned coordinated speed change is carried out, there is a case in which a driving force gap (or acceleration gap, G-drop) produced at up-shifting of the auxiliary transmission mechanism is felt by a driver due to the driving condition of the vehicle. That is, at up-shifting of the auxiliary transmission mechanism, the speed change stage for effecting the torque transmission in the torque phase is shifted from 1^{st} speed to 2^{nd} speed, and thus, the vehicle driving force is lowered, and at the subsequent inertia phase, the speed change ratio of the variator is shifted from High-side to Low-side thereby to restore the vehicle driving force. With this series of operation, the above-mentioned driving force gap is produced during the period from the torque phase to the inertia phase.

When the driving force gap is of a type that is clearly felt by the driver, he or she would have a sluggish feeling (G-drop feeling) in acceleration thereby failing to have an intended acceleration feeling, which causes deterioration in vehicle drive feeling. Particularly, in a vehicle driving wherein the vehicle is being accelerated from a lower speed with an accelerator pedal kept depressed slightly (constant low accelerator open degree), the sluggish feeling of the driver to the acceleration becomes remarkable. The best way for preventing the driver from having such sluggish feeling to the acceleration is to eliminate or at least minimize the driving force gap per se. However, because the driving force gap is determined by the interstage ratio between the first speed and second speed of the auxiliary transmission mechanism, it is quite difficult to eliminate or minimize the driving force gap without making a big change to hardware construction and control logic.

One of objects of the present invention is thought out in view of the above-mentioned tasks and is to provide a control device for a continuously variable transmission in which a CVT with an auxiliary transmission is so constructed as to eliminate the sluggish feeling in acceleration thereby to improve the vehicle drive feeling. It is to be noted that the object of the invention is not limited to the above-mentioned object and searching for effects that are provided by after-mentioned embodiments of the present invention and not provided by conventional technology constitutes other objects of the present invention.

### Prior Art Documents:

### Patent Documents:

Patent Document-1: Japanese Laid-open Patent Application (tokkaihei) 5-79554

Patent Document-2 is represented by JP-B2-4914467, which discloses all the features of the preamble according to claim 1.

According to the present invention, said object is solved by a control device according to claim 1.

Preferred embodiments are laid down in the dependent claims.

### Summary of Invention:

(1) A control device for a continuously variable transmission that comprises a belt-type continuously variable transmission mechanism that is configured to steplessly vary a rotation speed given from a driving source and an auxiliary transmission mechanism which is a stepwisely variable transmission mechanism that is connected in series to the continuously variable transmission mechanism and has as forward sped change stages a first speed change stage and a second speed change stage whose speed change ratio is smaller than that of the first speed change stage, the control device further comprising a coordinated speed change section that is configured to carry out a coordinated speed changing in such a manner that when the speed change stage of the auxiliary transmission mechanism is about to be changed, a speed change speed of the auxiliary transmission mechanism is coordinated with the continuously variable transmission mechanism and the continuously variable transmission mechanism is controlled to carry out a speed change in a direction opposite to that of the auxiliary transmission mechanism while carrying out the speed change operation of the auxiliary transmission mechanism.
   The control device further comprises a torque control section that is configured to carry out a torque regulating control during the coordinated speed changing under up-shifting of the auxiliary transmission mechanism by the coordinated speed change section, the torque regulating control being a control for effecting a torque-up operation to the driving source after effecting a torque-down operation to the driving source and including a timing through which a starting time point of a drive force gap, also denoted by a drive for stopping, caused by the coordinated speed changing is advanced and a timing through which an ending time point of the drive force gap is delayed.
(2) It is preferable that the coordinated speed change section is configured to carry out the coordinated speed changing by causing the up-shift operation to experience a preparatory phase, a torque phase, an inertia phase and an ending phase in order. In this case, it is preferable that the torque control section is configured to carry out the torque regulating control in a period consisting of the preparatory phase and the torque phase, and is configured to carry out the torque regulating control in a period consisting of the inertia phase and the ending phase.
(3) It is preferable that the torque control section is configured to controls a torque down amount of the driving source to take a value that is equal to or greater than 0 (zero) at the point in time when the phase is shifted from the torque phase to the inertia phase.
(4) It is preferable that the torque control section is configured to controls the torque down amount to take a value of 1 (one) at the point in time when the phase is shifted from the preparatory phase to the torque phase.
(5) It is preferable that the torque control section is configured to start the torque regulating control at the point in time when a given time passes from the time of shifting to the inertia phase.

According to the disclosed control device for a continuously variable transmission, the torque regulating control is carried out by operatively using a timing through which a starting time point of a drive force gap caused by the coordinated speed changing is advanced as well as another timing through which an ending time point of the drive force gap is delayed. Thus, the reduction rate of the drive force gap and the returning rate of the drive force gap can be gentled. Thus, the sluggish feeling applied to a driver in vehicle acceleration can be eliminated and thus, the drive feeling can be improved.

### Brief Description of Drawings:

Fig. 1 shows a block diagram of a control device for a continuously variable transmission which is one embodiment of the present invention and a schematic diagram of a vehicle to which the control device is practically applied.
Fig. 2 is one example of speed change maps.
Fig. 3 is one example of flowcharts, showing processes that are carried out in the control device of the embodiment to carry out a torque regulation control.
Fig. 4 is a time chart used for explaining operations controlled by the control device for the continuously variable transmission of the embodiment, in which (a) depicts a phase, (b) depicts a through speed change ratio, (c) depicts an auxiliary speed change ratio, (d) depicts a variator speed change ratio, (e) depicts a supplied hydraulic pressure, (f) depicts a driving force, (g) depicts an engine torque, (h) depicts a torque down amount and (i) depicts a torque down rate.
Figs. 5 (a) to (g) shows a time chart used for explaining modifications of the torque regulating control, which corresponds to Fig. 4 (g).

### Embodiment for carrying out Invention:

In the following, an embodiment of the present invention will be described with reference to the accompanying drawings. It is to be noted that the following embodiment is only an example and the applicants have no intention of excluding application of various modifications and techniques that are not shown in the following embodiment. It is further to be noted that various modifications of the following embodiment may be carried out within a scope of the present invention, selection is available as the need arises and suitable combinations are available.

### [1. Entire System Construction]

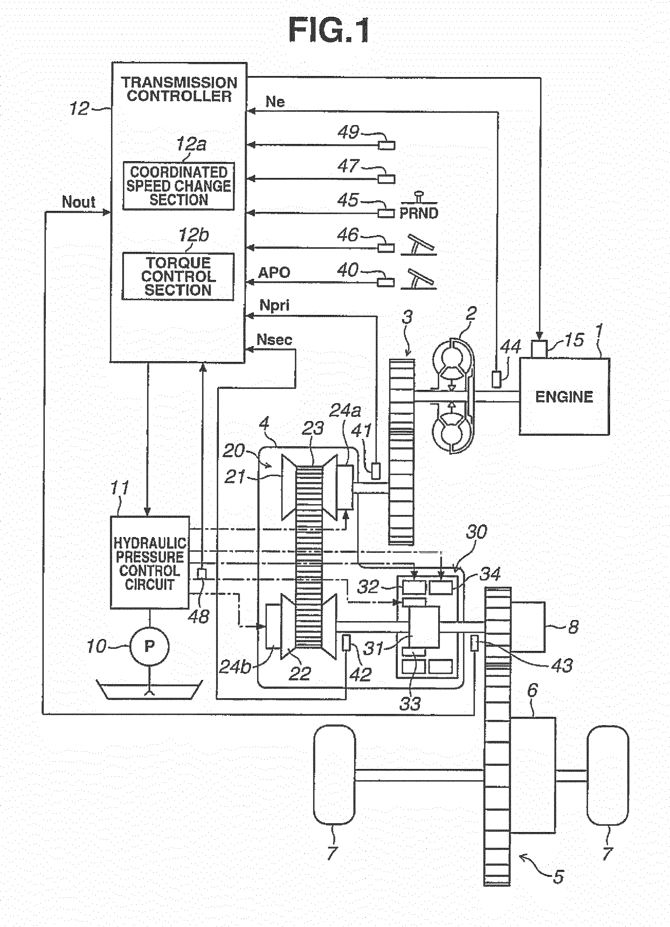

Fig. 1 is a schematic block diagram of a motor vehicle that has the control device for the continuously variable transmission of the embodiment mounted thereon. As is seen from Fig. 1, the vehicle is equipped with an engine (internal combustion engine) as a driving source. An output rotation of the engine 1 is transmitted to drive road wheels 7 through a torque converter 2 with a lock-up clutch, a first gear train 3, a continuously variable transmission 4 (which will be referred to as a transmission 4 in the following), a second gear train 5 and a final reduction gear 6. The second gear train 5 is equipped with a parking mechanism 8 that mechanically locks an output shaft of the transmission 4 while the vehicle is parked.

The engine 1 is equipped with an output torque control actuator 15 that carries out an output torque control by selectively opening and closing a throttle valve and/or effecting a fuel cut operation. With the actuator, the output torque of the engine 1 can be controlled by an engine control signal sent from outside as well as by the output torque control that is effected by the accelerator operation by the driver. In this embodiment, the output torque of the engine 1 (which will be referred to as engine torque in the following) is controlled by a transmission controller 12.

The vehicle is equipped with an oil pump 10 that is driven by part of power of the engine 1. Furthermore, the vehicle is equipped with a hydraulic pressure control circuit 11 by which the hydraulic pressure from the oil pump 10 is adjusted and led into various portions of the transmission 4, and the transmission controller 12 by which the hydraulic pressure control circuit 11 and its associated parts are controlled.

The transmission 4 is of a type that consists of a belt-type continuously variable transmission mechanism 20 (which will be referred to as a variator 20 in the following) and an auxiliary transmission mechanism (which is called simply as auxiliary transmission) 30 that is arranged in series with the variator 20. Arranged in series means that the variator 20 and the auxiliary transmission mechanism 30 are connected in series in a power transmitting route from the engine 1 to the drive road wheels 7. In this disclosed embodiment, the auxiliary transmission mechanism 30 is directly connected to an output shaft of the variator 20. If desired, the auxiliary transmission mechanism 30 may be connected to the variator 20 through another speed change or power transmission mechanism.

The variator 20 has a continuously variable transmission function that continuously or steplessly varies a speed ratio (viz., rotation speed of transmission input shaft/rotation speed of transmission output shaft) between the rotation speed of the transmission input shaft and that of the transmission output shaft by varying effective diameters of rotation members that have a belt operatively put therearound. The variator 20 is equipped with a primary pulley 21, a secondary pulley 22 and a V-belt 23 that is put around these two pulleys 21 and 22.

Each of the primary and secondary pulleys 21 and 22 has a fixed conical board and a movable conical board that is arranged to face its sheave surface to a sheave surface of the fixed conical board thereby to constitute therebetween a V-shaped groove, and each pulley 21 or 22 further has a hydraulic cylinder 24a or 24b. Each hydraulic cylinder 24a or 24b is mounted on a back of the corresponding movable conical board, so that the movable conical board is shifted in an axial direction when a hydraulic pressure (operation hydraulic pressure) applied to the cylinder 24a or 24b is varied. The hydraulic pressure fed to the hydraulic cylinders 24a and 24b is controlled by the transmission controller 12. When, due to change in width of the V-shaped groove, the effective diameter of each pulley 21 or 22 provided by contact of the V-belt 23 with the pulley 21 or 22 is changed, the speed change ratio of the variator 20 (which will be referred to as variator speed change ratio in the following) is steplessly or continuously varied.

The auxiliary transmission mechanism 30 is a stepwisely variable transmission mechanism with two forward speed change stages and one backward stage. The auxiliary transmission mechanism 30 comprises a Ravigneaux type planetary gear mechanism 31 that has carriers by which two planetary gears are united and a plurality of friction fastening elements 32 to 34 that are connected to a plurality of rotation elements of the Ravigneaux type planetary gear mechanism 31 in a manner to change the connection state therebetween. By adjusting the hydraulic pressure applied to the friction fastening elements 32 to 34, ON/OFF state of each friction fastening element 32, 33 or 34 is changed and thus the speed change stage of the auxiliary transmission mechanism 30 is changed.

In the embodiment, a Low brake (first speed change stage) 32 used for starting the vehicle, a High clutch (second speed change stage) 33 that induces a speed change ratio smaller than that of the Low brake 32 and a Rev brake 34 are employed as the friction fastening elements. The Low brake 32, High clutch 33 and Rev brake 34 generate each a transmission torque in accordance with the hydraulic pressure (operation hydraulic pressure) applied thereto. The hydraulic pressure applied to the Low brake 32, High clutch 33 and Rev brake 34 is controlled by the transmission controller 12.

That is, for example, when the Low brake 32 is engaged and both the High clutch 33 and the Rev brake 34 are disengaged, the auxiliary transmission mechanism 30 assumes the first speed change stage. Usually, at the time of starting the vehicle, the auxiliary transmission mechanism 30 takes the first speed change stage. Thus, at the vehicle starting, only the Low brake 32 is engaged. When the High clutch 33 is engaged and both the Low brake 32 and the Rev brake 34 are disengaged, the auxiliary transmission mechanism 30 takes the second speed change stage whose speed change ratio is smaller than that of the first speed change stage. While, when the Rev brake 34 is engaged and both the Low brake 32 and the High clutch 33 are disengaged, the auxiliary transmission mechanism 30 takes the reverse stage.

The hydraulic pressure control circuit 11 comprises a plurality of fluid passages and a plurality of hydraulic control valves. Based on speed change control signals issued from the transmission controller 12, the hydraulic pressure control circuit 11 controls the plurality of hydraulic control valves to switch hydraulic pressure feeding passages and prepares a needed hydraulic pressure by adjusting the hydraulic pressure led from the oil pump 10. The adjusted hydraulic pressure is fed to various portions (the hydraulic cylinders 24a, 24b and the friction fastening elements 32 to 34) of the transmission 4. With this, the speed change ratio of the variator and the speed change stage of the auxiliary transmission mechanism 30 are changed to allow the transmission 4 to carry out the speed changing.

The transmission controller 12 is a computer including a CPU that carries out various types of arithmetic processing, a ROM that stores programs and data needed for working the CPU, 44, a RAM that temporarily stores the results of the arithmetic processing, input/output ports that are used for inputting or outputting signals from or to the outside, and a timer that counts a time. As is seen from Fig. 1, to the transmission controller 12, there are connected various sensors and switches which are an accelerator open degree sensor 40, a primary rotation speed sensor 41, a secondary rotation speed sensor 42, a vehicle speed sensor 43, an engine rotation speed sensor 44, an inhibitor switch 45, a brake switch 46, a front and rear G-sensor 47, a hydraulic pressure switch 48 and an oil temperature sensor 49, and to the transmission controller 12, there are inputted various types of information sensed by the sensors and switches.

The accelerator open degree sensor 40 detects the amount (accelerator open degree APO) of depression of an accelerator pedal (not shown). The accelerator open degree APO is a parameter that corresponds to an acceleration intention and a vehicle starting intention of a driver. The primary rotation speed sensor 41 detects a rotation speed (input rotation speed of the transmission 4) Npri of the primary pulley 21, and the secondary rotation speed sensor 42 detects a rotation speed (input rotation speed of the auxiliary transmission mechanism 30) Nsec of the secondary pulley 22.

The output rotation sensor 43 detects the output shaft rotation speed of the transmission 4 as an output rotation speed Nout. By the output rotation sensor 43, the output rotation speed (output rotation speed) Nout of the auxiliary transmission mechanism 30 is obtained. The engine rotation speed sensor 44 detects the number of rotation per unit time of for example the crankshaft as the engine rotation speed Ne. The inhibitor switch 45 detects the position (range position) of the select lever (shift lever) selected by the driver and outputs a range position signal that represents the selected range position.

The brake switch 46 is a switch for detecting the depression of a foot brake. The front and rear G-sensor 47 detects front and rear G (acceleration in the front and rear direction) that is applied to the vehicle. By using output signals from the front and rear G sensor 47, inclination and behavior of the vehicle are calculated. The hydraulic pressure switch 48 is a switch for detecting a condition of the hydraulic pressure that is led for example to the Low brake 32 and the High clutch 33. The oil temperature sensor 49 detects the temperature (oil temperature) of the oil. Since the oil temperature affects the viscosity of the oil, checking whether or not the oil temperature is suitable for appropriately operating the oil pump 10 is carried out by using the oil temperature sensor 49.

In the ROM of the transmission controller 12, there are stored control programs and the like that control the auxiliary transmission mechanism 30. The CPU reads the control programs in the ROM, executes the read control programs, applies various types of arithmetic processing to various signals inputted thereto through the input port (input interface) to produce control signals, and outputs the produced control signals to the hydraulic pressure control circuit 11 through the output port (output interface). Various values used in the arithmetic processing of the CPU and arithmetic results are suitably stored in the RAM.

Concreate control objects of the transmission controller 12 are a line pressure control that obtains a target line pressure in accordance with the throttle open degree and a speed change control that controls the variator 20 and the auxiliary transmission mechanism 30 in accordance with an operation condition of the vehicle. In the following, explanation will be directed to a speed change control and coordinated speed change effected by the transmission controller 12, and detailed explanation will be directed to a torque regulating control that is carried out during the coordinated speed change in the up-shift of the auxiliary transmission mechanism 30.

### [2. Summary of Control]

### [2-1. Speed Change Control]

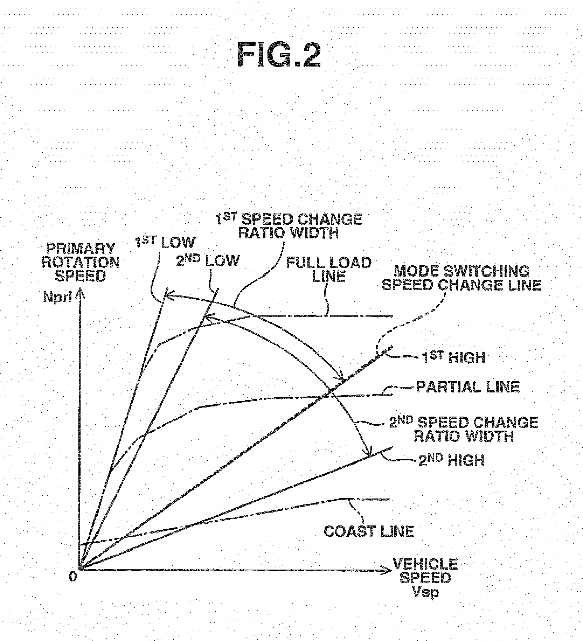

Fig. 2 shows one example of speed change maps stored in the ROM of the transmission controller 12. By using the speed change maps, the transmission controller 12 controls both the speed changing of the variator 20 and the stage changing of the auxiliary transmission mechanism 30.

Fig. 2 is a speed change map that shows at its x-axis the vehicle speed calculated from the output rotation speed Nout and at its y-axis the primary rotation speed Npri. That is, the operation point of the transmission 4 is defined or determined by the vehicle speed Vsp and the primary rotation speed NPri. An inclination of a line that connects the operation point of the transmission 4 with the zero point placed at the leftmost lowest position of the speed change map corresponds to the speed change ratio of the transmission 4 (viz., a total speed change ratio provided by multiplying the speed change ratio of the variator by a speed change ratio that corresponds to the speed change stage of the auxiliary transmission mechanism 30, which will be referred to as a through speed change ratio in the following).

In the speed change map, there is set a speed change line for each accelerator open degree APO, and the speed change of the transmission 4 is carried out based on a speed change line that is selected in accordance with the accelerator open degree APO. It is to be noted that in Fig. 2, only three speed change lines, which are a full-load line (viz., the speed change line at the time when the accelerator open degree APO=8/8 is made), a partial line (viz., the speed change line at the time when the accelerator open degree APO=4/8 is made) and a coast line (viz., the speed change line at the time when the accelerator open degree APO=0/8 is made), are indicated by dot-dash lines.

When the auxiliary transmission mechanism 30 takes the first speed change stage, the transmission 4 can take a speed changing In a range between 1^{st} Low line (Low Speed Most Low line) obtained by setting the variator speed change ratio to the Most Low speed change ratio (that is, maximum speed change ratio) and 1^{st} High line (Low Speed Most High line) obtained by setting the variator speed change ratio to the Most High speed change ratio (that is, minimum speed change ratio). In this range, the operation point of the transmission 4 moves in a width of 1^{st} speed change ratio. While, when the auxiliary transmission mechanism 30 takes the 2^{nd} speed, the transmission 4 can take a speed changing in a range between 2^{nd} Low line (High Speed Most Low line) obtained by setting the variator speed change ratio to the Most Low speed change ratio and 2^{nd} High line (High Speed Most High line) obtained by setting the variator speed change ratio to the Most High speed change ratio. In this range, the operation point of the transmission 4 moves in a width of 2^{nd} speed change ratio.

The speed change ratio of each speed change stage of the auxiliary transmission mechanism 30 is so set that the speed change ratio corresponding to the 1^{st} high line is smaller than the speed change ratio corresponding to the 2^{nd} Low line. With this relationship, the range of the through speed change ratio that can be taken by the transmission 4 when the auxiliary transmission mechanism 30 takes 1^{st} speed is partially overlapped with the range of the through speed change ratio that can be taken by the transmission 4 when the auxiliary transmission mechanism 30 takes 2^{nd} speed. When the operation point of the transmission 4 is placed in the overlapped zone, the transmission 4 is able to select either of 1^{st} speed and 2^{nd} speed.

In the speed change map, as is indicated by a thicker broken line, a mode switching speed change line for causing the auxiliary transmission mechanism 30 to effect the 1-2 speed change is set to be almost overlapped with the 1^{st} High line. That is, the through speed change ratio corresponding to the mode switching speed change line (which will be referred to as mode switching speed change ratio in the following) is set almost identical to the speed change ratio that corresponds to the 1^{st} High line. When, under cruising with 1^{st} speed, the vehicle speed Vsp increases and the operation point of the transmission 4 crosses the mode switching speed change line, the speed change stage of the auxiliary transmission mechanism 30 is switched from 1^{st} speed stage to 2^{nd} speed stage.

While, in case where under cruising with 2^{nd} speed, the vehicle speed Vsp decreases causing the operation point of the transmission 4 to cross the mode switching speed change line and a much larger drive force that is not obtained from the 2^{nd} speed vehicle driving is required, the speed change stage of the auxiliary transmission mechanism 30 is switched from 2^{nd} speed stage to 1^{st} speed stage when the operation point of the transmission 4 crosses the mode switching speed change line. While, in case where the required larger drive force is obtainable from the 2^{nd} speed vehicle driving, the auxiliary transmission mechanism 30 keeps 2^{nd} speed and the speed change is carried out by only the variator 20.

### [2-2. Coordinated Speed Change]

The coordinated speed change is a control in which in case of changing the speed change stage of the auxiliary transmission mechanism 30, the change speed of the auxiliary transmission mechanism 30 is matched with the variator 20 and at the same time, the variator 20 is changed in speed in a direction opposite to the speed change direction of the auxiliary transmission mechanism 30 while changing the speed of the auxiliary transmission mechanism 30.

In the coordinated speed change, when the target through speed change ratio of the transmission 4 changes from a value larger than the mode switching speed change ratio to a value smaller than the mode switching speed change ratio, the speed change stage of the auxiliary transmission mechanism 30 is changed from 1^{st} speed change stage to 2^{nd} speed stage (which will be referred to as 1-2 speed change in the following) and at the same time, the variator speed change ratio is varied toward a larger speed change ratio side (Low side). While, when the target through speed change ratio of the transmission 4 changes from a value smaller than the mode switching speed change ratio to a value larger than the mode switching speed change ratio, there is a case in which the speed change stage of the auxiliary transmission mechanism 30 is changed from 2^{nd} speed stage to 1^{st} speed stage (which will be referred to as 2-1 speed change in the following) and at the same time, the variator speed change ratio is varied toward a smaller speed change ratio side (High side).

When the coordinated speed change is carried out at the mode switching speed changing as is mentioned hereinabove, uncomfortable feeling given to a driver, which would be caused by the change in input rotation produced by the gap of the through speed change ratio of the transmission 4, is suppressed. Furthermore, since the mode switching speed changing is carried out at the time when the variator speed change ratio is substantially the Most High speed change ratio, undesired shift shock of the auxiliary transmission mechanism 30 is mitigated. This is because under such condition the torque inputted to the auxiliary transmission mechanism 30 is the smallest in the torques that are inputted to the variator 20.

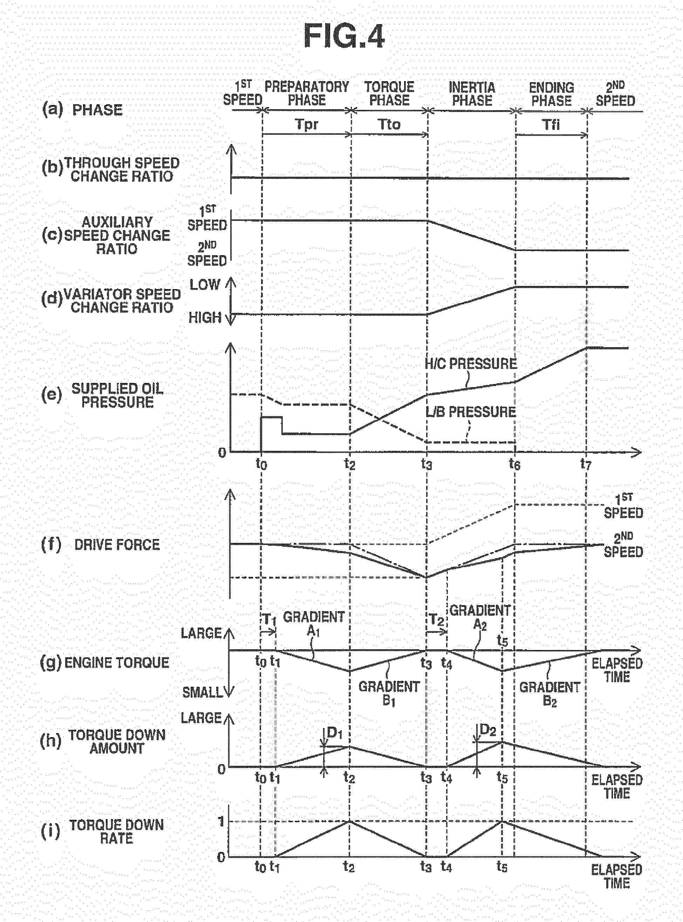

Details of the coordinated speed change will be explained with the aid of the time chart shown in Fig. 4. Figs. 4(a) to 4(i) show the time chart at the time when the auxiliary transmission mechanism 39 is under up-shifting (viz., 1-2 speed change). The following explanation on the coordinated speed change is directed to the case of the 1-2 speed change. As will be seen from Fig. 4(a), the speed change of the auxiliary transmission mechanism 30 consists of four phases, which are a preparatory phase, a torque phase, an inertia phase and an ending phase. For effecting the up-shifting, the phases are carried out in this order. It is to be noted that in case of 2-1 speed change, explanation on both the friction fastening elements to be fastened and the friction fastening elements to be released is reversed to the following explanation.

As is seen from Fig. 4(a), the preparatory phase is a phase in which a pre-charging of hydraulic pressure is applied to the High clutch 33 (viz., friction fastening element to be fastened) for causing the High clutch 33 to stand by in the state immediately before engagement. The preparatory phase starts for example at the point (time to) in time when, during a vehicle cruising with the auxiliary transmission mechanism 30 taking 1^{st} speed, the vehicle speed Vsp increases causing the operation point of the transmission 4 to cross the mode switching speed change line, and ends at the point (time t₂) in time when a given time Tpr passes from the start.

As is seen from Fig. 4(e), the torque phase is a phase in which by lowering the hydraulic pressure fed to the Low brake 32 (viz., friction fastening element to be released) and increasing the hydraulic pressure fed to the High clutch 33, the stage that carries out the torque transmission is changed from 1^{st} speed stage (viz., the stage provided by the friction fastening element to be released) to 2^{nd} speed stage (viz., the stage provided by the friction fastening element to be fastened). The torque phase starts at the point (time t₂) in time when the preparatory phase ends and ends at the point (time t₃) in time when a given time Tto passes from the start. In the torque phase, when, as will be understood from the dot-dash line shown in Fig. 4(f), the engine torque is not controlled and thus shows a fixed value, the drive force is gradually lowered from the start of the torque phase.

As is seen from Figs. 4(c) and 4(d), the inertia phase is a phase in which the speed change ratio (which will be referred to as auxiliary speed change ratio in the following) of the auxiliary transmission mechanism 30 is smoothly changed from 1^{st} speed stage (viz., the stage before speed change) to 2^{nd} speed stage (viz., the stage after speed change) and the variator 20 is subjected to a speed changing in a direction (from High to Low) opposite to the speed change direction of the auxiliary transmission mechanism 30. In this case, the speed change speed of the auxiliary transmission mechanism 30 is brought to be matched with the speed change speed of the variator 20, so that the speed change speed of the auxiliary transmission mechanism 30 and that of the variator 20 become generally equal to each other. With this operation, the through speed change ratio is fixed as is seen from Fig. 4(b).

The inertia phase is a phase in which the speed change stage of the auxiliary transmission mechanism 30 is changed, and the inertial phase starts at the point (time t₃) in time when the torque phase ends and ends at the point (time t₆) in time when the stage change finishes. Ending of the stage change is judged by using the secondary rotation speed Nsec detected by the secondary rotation speed sensor 42, the vehicle speed Vsp detected by the vehicle speed sensor 43 and a gear ratio of the second gear train 5. In the inertia phase, as will be understood from the dot-dash line of Fig. 4(f), when the engine torque is not controlled and thus shows a fixed value, the drive force gradually returns with the start of the inertia phase, and returns to its original drive force at the point in time when the inertia phase ends. That is, the point in time when the torque phase is shifted to the inertia phase is the point in time when a drive force gap is produced to reduce the drive force to the minimum value.

As is seen from Fig. 4(e), the ending phase is a phase in which by feeding 0 (zero) hydraulic pressure to the Low brake 32, the Low brake 32 is completely released and by increasing the hydraulic pressure fed to the High clutch 33, the High clutch 33 is completely fastened. The ending phase starts at the point (time t₆) in time when the inertia phase ends and ends at the point (time t₇) in time when a given time Tfi passes from the start.

### [2-3. Torque Regulating Control]

The torque regulating control is a control in which, for eliminating a sluggish feeling in acceleration caused by the drive force dropping (drive force gap) that is produced in the period from the torque phase to the inertial phase of the above-mentioned coordinated speed change, after giving a torque down amount by subjecting the engine 1 to a torque down, a torque-up operation is applied to the engine to make the torque down amount 0 (zero) (that is, the engine torque is regulated). In the control device, the torque regulating control is carried out twice in one coordinated speed change.

Since the drive force gap is determined by a stage/stage ratio between 1^{st} speed and 2^{nd} speed of the auxiliary transmission mechanism 30, it is difficult to suppress the drive force gap without making a big change to hardware construction and control logic. Accordingly, in the control device, by a first torque regulating control, the start time for the drive force gap is advanced, and by a second torque regulating control, the ending time for the drive force gap is delayed. In other words, the first torque regulating control (first torque regulating control) is carried out at a timing that advances the starting of the drive force gap, and the second torque regulating control (second torque regulating control) is carried out at a timing that delays the ending of the drive force gap.

With such controls, the reducing tendency of the drive force and returning tendency of the same are gentled (that is, inclination of the drive force gap is reduced), and thus the driver is protected from having the undesired sluggish feeling in acceleration. As is seen from Figs. 4(a) to 4(i), the first torque regulating control is carried out in a period that includes the preparatory phase and the torque phase, and the second torque regulating control is carried out in a period that includes the inertia phase and the ending phase.

In the first torque regulating control, from the point (time t₁) in time when a first given time T₁ passes from the starting (time t₀) of the preparatory phase, the engine torque is gradually reduced with a given gradient A₁. Then, from the point (time t₂) in time when the phase is changed from the preparatory phase to the torque phase, the engine torque is gradually increased with a given gradient B₁. That is, at the point in time when the phase is changed from the preparatory phase to the torque phase, the torque down rate shows value 1 (one), and thus, sudden change of the drive force is suppressed. Then, together with the ending of the torque phase, the first torque regulating control is ended.

The torque regulating control is a control by which the drive force dropping caused by the speed change is gentled thereby to suppress the driver from having a sluggish feeling in acceleration (G drop feeling), and in which for gentling the drive force dropping, advanced starting of the control is effective. However, in case of advanced starting, reduction of the drive force inevitably takes place by a degree corresponding to the advanced starting, and thus it is preferable to avoid a longer time operation of the torque regulating control in view of the necessity of keeping the vehicle speed. By taking such points into consideration, the first given time T₁ is set.

In the invention, the gradient A₁ at the torque down time is previously set to a rate of change by which the engine torque can have a target torque down amount D₁ in a period from the point in time t₁ when the torque down starts to the time t₂ when the preparatory phase ends. Furthermore, the gradient B₁ at the torque up time is previously set to a rate of change by which the torque down amount becomes 0 (zero) in a period from the point t₂ in time when the torque up starts to the point in time t₃ when the torque phase ends. It is to be noted that the target torque down amount D₁ is a value that is previously derived by experiment.

In the second torque regulating control, from the point (time t₄) in time when a second given time T₂ passes from the starting (time t₃) of the inertia phase, the engine torque is gradually reduced with a given gradient A₂. From the point (time t₅) in time when the engine torque takes a target torque down amount D₂, the engine torque is gradually increased with a given gradient B₂. That is, at the latter half of the inertia phase, the torque down rate shows the value 1 (one). Then, a little later after the end of the ending phase, the second torque regulating control is ended.

The point in time when the torque phase is replaced with the inertia phase is the point in time when the drive force gap appears, and thus, if the torque down operation is started at that point in time, the returning tendency of the drive force gap can be reduced. However, the time needed for returning the drive force to its original value is increased for that, and thus, there is a possibility that the drive force gap might be elongated. By taking such points into consideration, the second given time T₂ is set.

The gradient A₂ at the time of the torque down is a rate of change that is previously so set that the engine torque can have the target torque down amount D₂ during the inertia phase. While, the gradient B₂ at the time of the torque down is a rage of change that is previously so set that the torque down amount becomes 0 (zero) during the ending phase or after the ending phase. The target torque down amount D₂ is previously derived by experiment.

### [3. Control System]

As is seen from Fig. 1, the transmission controller 12 is equipped with a coordinated speed change section 12a and a torque control section 12b, which are elements for carrying out the torque regulating control at the time of the above-mentioned coordinated speed changing. These elements may be realized by an electronic circuit (hardware), a software having programs installed or a combined means including a hardware that works as a part of these functions and a software that works as the other part of these functions. The above-mentioned speed change control is able to use the known technology (for example, Japanese Patent 4914467), and here, the coordinated speed change and the torque regulating control will be described in detail.

The coordinated speed change section 12a is a section that carries out the above-mentioned coordinated speed change when the operation point of the transmission 4 crosses the mode switching speed change line. That is, when the through transmission ratio of the transmission 4 is varied from a value larger than the mode switching speed change ratio to a value smaller than the mode switching speed change ratio, the auxiliary transmission mechanism 30 is forced to make the 1-2 speed change and the variator speed change ratio is forced to take Low side. While, when the through transmission ratio of the transmission 4 is varied from a value smaller than the mode switching speed change ratio to a value larger than the mode switching speed change ratio, the auxiliary transmission mechanism 30 is forced to make the 2-1 speed change and the variator speed change ratio is forced to take High side.

For example, in case of the 1-2 speed change, the coordinated speed change section 12a precharges the High clutch 33 in the preparatory phase to cause the High clutch 33 to stand by in the stage immediately before engagement. In the subsequent torque phase, the hydraulic pressure fed to the Low brake 32 is reduced and at the same time the hydraulic pressure fed to the High clutch 33 is increased. With this, the speed change stage for effecting the torque transmission is changed from 1^{st} speed stage to 2^{nd} speed stage. With the aid of a timer, the coordinated speed change section 12a carries out both the preparatory phase and the torque phase for given times Tpr and Tto respectively.

In the inertia phase, the coordinated speed change section 12a controls the auxiliary transmission mechanism 30 in such a manner that the speed change stage of the mechanism 30 is smoothly changed from 1^{st} speed stage to 2^{nd} speed stage in coordination with the speed change speed of the variator 20, and the variator 20 is speed changed from High side to Low side. In the last ending phase provided after the speed change of the auxiliary transmission mechanism 30, the hydraulic pressure fed to the Low brake 32 is made 0 (zero) thereby to fully release the Low brake 32 and the hydraulic pressure fed to the High clutch 33 is increased thereby to fully engage the High clutch 33. When the coordinated speed change section 12a starts the coordinated speed change in the up-shift, the section 12a transmits the information on the starting of the coordinated speed change to the torque control section 12b and transmits current phase information to the torque control section frequently.

In case of carrying out the coordinated speed change in the up-shift by the coordinated speed change section 12a, the torque control section 12b controls the engine torque for carrying out the above-mentioned torque regulating control. Here, a case in which the engine torque is controlled by the control for the output torque control actuator 15 by the transmission controller 12 is explained as an example. However, if desired, the output torque control actuator 15 may be controlled through a control device that controls the engine 1.

When the coordinated speed change section 12a issues an information on starting of the coordinated speed change in the up-shift, the torque control section 12b carries out the first and second torque regulating controls in cooperation with the degree (phase) of advance of the coordinated speed change. More specifically, from the point in time when the first given time T₁ passes from the time when the coordinated speed change starts, the engine torque is reduced with the given gradient A₁. With this, with the end of the preparatory phase, the torque down rate is made 1 (one). Then, at the point in time when the phase is shifted to the torque phase, the engine torque is raised with the given gradient B₁. With this, with the end of the torque phase, the torque down amount is made 0 (zero).

After the phase is shifted to the inertia phase, the torque control section 12b reduces the engine torque with a given gradient A₂ from the point (time t₄) in time when the second given time T₂ passes. After the engine torque reaches the target torque down amount D₂, the engine torque is increased with the given gradient B₂. And, at the point in time when the torque down amount becomes 0 (zero), the torque regulating control is ended.

### [4. Flowchart]

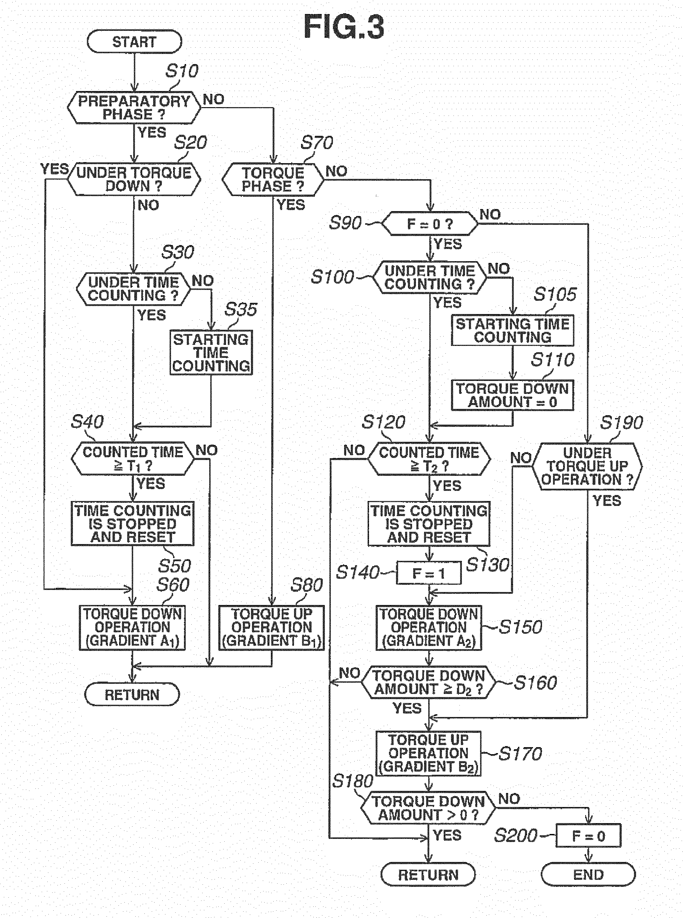

In the following, operation steps of the torque regulating control for the engine 1 which are carried out by the transmission controller 12 will be described with reference to Fig. 3. The operation steps depicted in the flowchart of Fig. 3 are repeatedly carried out at a given cycle when the coordinated speed change in the up-shift is started by the coordinated speed change section 12a.

As is seen from Fig. 3, at step S10, judgment is carried out as to whether or not the coordinated speed change is in the preparatory phase. Since the phase is the preparatory phase at the first arithmetic cycle, the operation step goes to step S20, and there judgment is carried out as to whether or not the torque down operation is being carried out by the torque control section 12b. Since the torque down operation is not carried out at the first arithmetic cycle, the operation step goes to step S30, and there judgment is carried out as to whether or not time is being counted by the timer. The timer is means for measuring the start timing of the first torque regulating control, and since, at the first arithmetic cycle, the time counting is not carried out, the timer starts the time counting at step S35.

At subsequent step S40, judgment is carried out as to whether or not the timer counted time is equal to or longer than the first given time T₁. When the timer counted time is shorter than the first given time T₁, the current arithmetic cycle is returned. In the next arithmetic cycle, the operation flow from step S30 is directly led to step S40 and there, the operation steps from step S10 to step S40 are repeatedly carried out until when the timer counted time becomes equal to or longer than the first given time T₁.

When the timer counted time becomes equal to or longer than the first given time T₁, the operation flow goes to step S50, and there the time counting by the timer is stopped and the timer counted value is reset. Then, at step S60, the torque down operation by the torque control section 12b is started returning the arithmetic cycle. In this torque down operation, the above-mentioned gradient A₁ is used. In the next and succeeding arithmetic cycles, the operation flow is led from step S20 to step S60 as long as the preparatory phase is kept, and the engine torque is lowered down with the gradient A₁.

When the phase of the coordinated speed change is shifted from the preparatory phase to the torque phase, the operation flow is led from step S10 to step S70. Then, at step S80, the torque up operation by the torque control section 12b is started returning the arithmetic cycle. In this torque up operation, the above-mentioned gradient B₁ is used. The arithmetic cycle having the first operation flow led to step S70 (that is, the point in time when the phase is shifted from the preparatory phase to the torque phase) is the point in time when the torque down rate shows 1 (one) (the torque down amount is maximum) in the first torque regulating control. Until the time when the torque phase ends, the engine torque is raised up with the gradient B₁.

When the phase of the coordinated speed change is shifted from the torque phase to the inertia phase, the operation flow is led from step S70 to step S90 and there, judgment is carried out as to whether the flag F is F=0 or not. It is to be noted that the flag F is a variable used for checking whether the second torque regulating control is being carried out or not, F=0 represents a case in which the second torque regulating control is not being carried out, and F=1 represents a case in which the second torque regulating control is being carried out.

In the arithmetic cycle that has the first operation flow to step S90, the flag shows F=0, and thus, the operation flow is led to step S100, and there judgment is carried out as to whether the timer counting is being carried out or not. In this point in time, the timer counting is not carried out, and thus, at step S105, the timer counting is started, and in the subsequent step S110, the torque down amount is set to 0 (zero). That is, at the point in time when the phase is shifted from the torque phase to the inertia phase, the torque up operation is ended and the torque down amount is set to 0 (zero).

Then, at step S120, judgment is carried out as to whether the timer counted value is equal to or greater than the second given time T₂ or not. When the timer counted value is smaller than the second given time T₂, the current arithmetic cycle is returned. In the next arithmetic cycle, the operation flow is directly led to step S120 from step 5100, and there the operation steps of step S10, step S70, step S90, step 5100 and step S120 are repeatedly carried out until the time when the timer counted value becomes equal to or larger than the second given time T₂.

When the timer counted value becomes equal to or larger than the second given time T₂, the operation flow goes to step S130 to stop the timer counting and reset the counted value, for starting the second torque regulating control. Then, at step S140, the flag is set to F=1, and at step S150, the torque down operation by the torque control section 12b is started. The gradient used in the torque down operation is the above-mentioned gradient A₂. At the subsequent step S160, judgment is carried out as to whether the torque down amount is equal to or greater than the target torque down amount D₂ or not, and if the torque down amount fails to reach the target torque down amount D₂, the current arithmetic cycle is returned.

In the next and succeeding arithmetic cycles, the flag F is set to F=1, and thus, the operation flow is led from step S90 to step S190 and there, judgment is carried out as to whether the torque up operation is being carried out or not. If in the previous cycle the torque down operation was made at step S150, the operation flow goes to S150 thereby to continue the torque down operation. These operation steps are repeatedly carried out until the time when the torque down amount becomes equal to or larger than the target torque down amount D₂.

When, at step S160, the judgment is so made that the torque down amount is equal to or larger than the target torque down amount D₂, the operation flow goes to step S170. At this step S170, the torque up operation by the torque control section 12b is started. In this operation, the gradient used is the above-mentioned gradient B₂. At subsequent step S180, judgment is carried out as to whether the torque down amount is larger than 0 (zero) or not, and if the torque down amount is larger than 0 (zero), the current arithmetic cycle is returned.

Since, in the succeeding arithmetic cycles, the torque up operation is set, the operation flow is led from step S190 to step S170 to keep the torque up operation. Until the time when the torque down amount becomes larger than 0 (zero) (in other words, until the time when the engine torque is returned to the level shown before the torque regulating control was carried out), these operation steps are repeatedly carried out. When at step S180 the judgment is so made that the torque down amount is equal to or smaller than 0 (zero), the operation flow goes to step S200 and there, the flag F is set to F=0 ending this operation flow.

### [5. Operation]

In the following, the drive force gap and torque regulating control related to the coordinated speed change under 1-2 speed change according to the control device will be described with reference to Figs. 4(a) to 4(i). However, contents previously described will be omitted.

The first torque regulating control starts at the point (time t₁) in time when the first given time T₁ passes from the point in time (time t₀) when the preparatory phase starts, and the engine torque is gradually reduced with the given gradient A₁, and at the time (time t₂) when the phase is shifted from the preparatory phase to the torque phase, the torque down rate is set to 1 (one). Thereafter, the engine torque is gradually increased. At the time (time t₃) when the torque phase ends, the torque down amount becomes 0 (zero) ending the first torque regulating control.

With this torque regulating control, as is shown by Fig. 4(f), the starting point of the drive force gap is shifted toward the preparatory phase side as compared with a conventional technique (dot-dash line). Accordingly, the reduction of the drive force starts in the preparatory phase, and in the period from the preparatory phase to the torque phase the drive force is gradually reduced with a gradient that is smaller than a conventional one. Thus, even though the reduction amount of the drive force is the same as that in a conventional technology, the reduction in rate of change helps to eliminate the sluggish feeling in acceleration that is applied to the driver.

The second torque regulating control starts as the point (time t₄) in time when the second given time T₂ passes from the point (time t₃) in time when the inertial phase starts, and the engine torque is gradually reduced with the given gradient A₂, and the torque down rate is set to 1 (one) in the inertia phase. Thereafter, the engine torque is gradually increased, after the ending phase, the torque down amount becomes 0 (zero) ending the second torque regulating control.

With this torque regulating control, as is shown by Fig. 4(f), the starting point of the drive force gap is shifted toward the ending phase as compared with the conventional technique. Accordingly, in the period from the inertia phase to the ending phase, the drive force gradually returns with a gradient that is smaller than a conventional one. Thus, even though the reduction amount of the drive force is the same as that in the conventional technology, the reduction in rate of change helps to eliminate the sluggish feeling in acceleration that is applied to the driver.

### [6. Effects]

Thus, according to the control device for the continuously variable transmission that embodies the invention, the torque regulating control is carried out by using two control timings, one being the timing by which the starting of the drive force gap is advanced and the other being the timing by which the ending of the drive force gap is delayed, and thus, the dropping speed of the drive force gap and the returning speed of the drive force gap can be gently controlled. With this gentle controlling, the undesired sluggish feeling in acceleration can be eliminated and thus the drive feeling is improved.

More specifically, by carrying out the first torque regulating control in the period that covers the preparatory phase and the torque phase, the timing for starting formation of the drive force gap is shifted toward the preparatory phase side to gently or slowly reduce the decreasing speed of the drive force. Furthermore, by carrying out the second torque regulating control in the period that covers the inertia phase and the ending phase, the timing for ending formation of the drive force gap is shifted toward the ending phase side to gently or slowly reduce the returning speed of the drive force. With these operations, even though the drive force is reduced by the same amount as that in a conventional technology, the gentle changing in the drive force drop and drive force returning helps to eliminate the sluggish feeling that is given to the driver in vehicle acceleration at the time of the coordinated speed changing, and thus, the drive feeling given to the driver can be improved.

The point in time when the phase is shifted from the torque phase to the inertia phase is the point in time when the drive force is highly reduced causing the drive force drop to show its valley part. In the control device of the invention, the torque down amount shows 0 (zero) at this point in time, and thus, increase in the drive force drop can be avoided. That is, by carrying out the torque regulating control, the sluggish feeling in the time of vehicle acceleration can be eliminated without increasing the drive force drop, and thus, the drive feeling given to the driver can be improved.

Furthermore, in the control device of the invention, at the point (time t₂) in time when shifting is made from the preparatory phase to the torque phase, the torque down rate is controlled to 1 (one). This point in time Is the point in time when in a conventional technique the drive force drop starts to appear causing an instant and remarkable change in the drive force and thus causing the driver to have the sluggish feeling in vehicle acceleration. While, in the invention, the control is so made that at that point in time, the torque down amount takes the target torque down amount D1. With this, the difference between the reduction in rate of change of the drive force drop at the preparatory phase and the reduction in rate of change of the drive force drop at the torque phase can be reduced and thus the driver can be protected from suffering the undesired sluggish feeling in the vehicle acceleration.

Furthermore, in the invention, the second torque regulating control starts at the time when the second given time T₂ passes from the point (time t₃) in time when the phase is shifted to the inertia phase. With this, the period elongation of the drive force drop can be prevented, the undesired sluggish feeling in vehicle acceleration given to the driver can be eliminated and thus the drive feeling given to the driver can be improved.

### [7. Others]

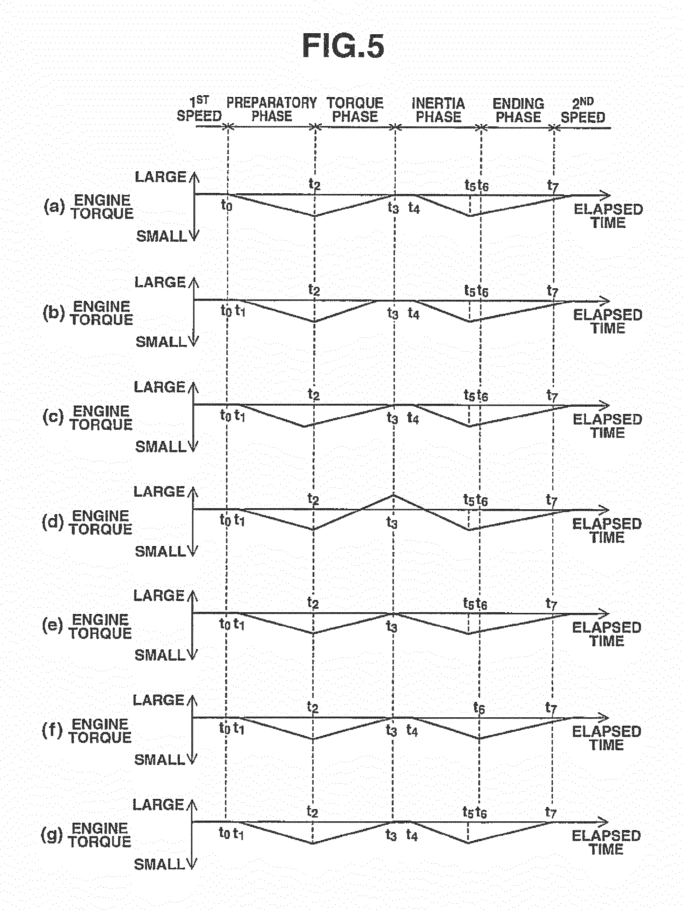

In the above, the embodiment of the invention has been described. It is however to be noted that the present invention is not limited to the invention and various modifications of the embodiment are possible within the scope of the invention, which is defined by the appended claims 1. It is further to be noted that the above-mentioned torque control section 12b is one example for the control and thus the concrete controlling is not limited to the above-mentioned one. In the following, one modification of the torque regulating control will be described with reference to Figs. 5(a) to 5(g).

For example, as is seen from Fig. 5(a), the first torque regulating control may be so changed that without waiting the time when the first given time T₁ passes from the preparatory phase, starting of the torque down operation is made just at the same time as the preparatory phase starts (viz., just at the time (time t₀) when the preparatory phase starts). In this case, the rate in change of the drive force reduction can be much reduced. Furthermore, as is seen from Fig. 5(b), the torque down amount may be controlled to take 0 (zero) at a latter half of the torque phase without using the technique of ending the torque up operation just at the time of ending of the torque phase. In this case, the reduction rate in change of the drive force at a front half of the torque phase can be much reduced. If desired, as is seen from Fig. 5(c), the torque down rate may be controlled to take 1 (one) at the latter half of the torque phase or at the front half of the torque phase. That is, the first torque regulating control has only to advance the point in time when the drive force gap is produced in response to the coordinated speed change.

In the above-mentioned embodiment, the torque down amount is controlled to take 0 (zero) at the point in time when the phase is shifted from the torque phase to the inertia phase. However, if desired, as is seen from Fig. 5(d), the torque down amount may be controlled to take a value larger than 0 (zero) (that is, taking a torque up operation). In this case, the drive force gap can be compensated by the engine torque, and thus, the valley of the drive force gap can be reduced thereby improving the drive feeling given to the driver.

Furthermore, the second torque regulating control is not limited to the control explained in the above embodiment. That is, as is seen from Fig. 5(e), just at the point in time (time t₃) when the inertia phase starts, the torque down operation may be made, or as is seen from Fig. 5(f), at the point in time (time t₆) when the phase is shifted from the inertia phase to the ending phase, the torque down rate may be controlled to take 1 (one). Furthermore, as is seen from Fig. 5(g), just at the point in time (time t₇) when the ending phase is ended, the torque down rate may be controlled to take 0 (zero). That is, the second torque regulating control has only to delay the point in time when the drive force gap is eliminated in response to the coordinated speed change.

Furthermore, the gradient A₁ at the time of torque down operation and the gradient B₁ at the time of torque down operation in the first torque regulating control may be set to same as the gradient A₂ at the time of torque down operation and the gradient B₂ at the time of torque down operation in the second torque regulating control. Furthermore, the torque down amount D₁ in the first torque regulating control may be set to the same as the torque down amount D₂ in the second torque regulating control.

Furthermore, examples of the torque regulating control shown in Figs. 5(a) to 5(g) may be suitably combined for carrying out the invention.

Although in the above-mentioned embodiment, the vehicle having the engine 1 as a driving source is shown, the driving source is not limited to the engine 1, and the driving source may be a motor or a motor generator.

## Claims

1. A control device for a continuously variable transmission (4) that comprises a belt-type continuously variable transmission mechanism (20) that is configured to steplessly vary a rotation speed given from a driving source (1) and an auxiliary transmission mechanism (30) which is a stepwisely variable transmission mechanism that is connected in series to the continuously variable transmission mechanism (20) and has as forward speed change stages a first speed change stage (32) and a second speed change stage (33) whose speed change ratio is smaller than that of the first speed change stage (32),
the control device further comprising:
a coordinated speed change section (12a) that is configured to carry out a coordinated speed changing in such a manner that when the speed change stage of the auxiliary transmission mechanism (30) is about to be changed, a speed change speed of the auxiliary transmission mechanism (30) is coordinated with the continuously variable transmission mechanism (20) and
the continuously variable transmission mechanism (20) is controlled to carry out a speed change in a direction opposite to that of the auxiliary transmission mechanism (30) while carrying out the speed change operation of the auxiliary transmission mechanism (30);
the control device being **characterized by**:
a torque control section (12b) that is configured to carry out a torque regulating control during the coordinated speed changing under up-shifting of the auxiliary transmission mechanism (30) by the coordinated speed change section (12a), the torque regulating control being a control for effecting a torque-up operation to the driving source (1) after effecting a torque-down operation to the driving source (1) and including a timing through which a starting time point of a drive force gap, also denoted by drive force dropping, caused by the coordinated speed changing is advanced and a timing through which an ending time point of the drive force gap is delayed.

2. A control device for a continuously variable transmission (4), as claimed in Claim 1, in which:
the coordinated speed change section (12a) is configured to carry out the coordinated speed changing by causing the up-shift operation to experience a preparatory phase, a torque phase, an inertia phase and an ending phase in order; and
the torque control section (12b) is configured to carry out the torque regulating control in a period consisting of the preparatory phase and the torque phase, and is configured to carry out the torque regulating control in a period consisting of the inertia phase and the ending phase.

3. A control device for a continuously variable transmission (4), as claimed in Claim 2, in which:
the torque control section (12b) is configured to control a torque down amount of the driving source (1) to take a value that is equal to or greater than 0 (zero) at the point in time when the phase is shifted from the torque phase to the inertia phase.

4. A control device for a continuously variable transmission (4), as claimed in Claim 2 or 3, in which:
the torque control section (12b) is configured to control the torque down amount to take a value of 1 (one) at the point in time when the phase is shifted from the preparatory phase to the torque phase.

5. A control device for a continuously variable transmission (4), as claimed in either one of Claims 2 to 4, in which:
the torque control section (12b) is configured to start the torque regulating control at the point in time when a given time passes from the time of shifting to the inertia phase.

## Patentansprüche

1. Steuerungsvorrichtung für ein stufenloses Getriebe (4), das einen stufenlosen Getriebemechanismus mit Riemen (20) aufweist, der ausgebildet ist, eine Drehzahl, die von einer Antriebsquelle (1) vorgegeben wird, stufenlos zu variieren, und einen Hilfsgetriebemechanismus (30) aufweist, der ein stufenweise veränderbarer Getriebemechanismus ist, der mit dem stufenlosen Getriebemechanismus (20) in Reihe verbunden ist und als Vorwärtsdrehzahländerungsstufen eine erste Drehzahländerungsstufe (32) und eine zweite Drehzahländerungsstufe (33) hat, deren Drehzahländerungsverhältnis kleiner ist als dasjenige der ersten Drehzahländerungsstufe (32),
wobei die Steuerungsvorrichtung ferner umfasst:
einen Abschnitt zur koordinierten Drehzahländerung (12a), der ausgebildet ist, eine koordinierte Drehzahländerung derart auszuführen, dass, wenn die Drehzahländerungsstufe des Hilfsgetriebemechanismus (30) umzuschalten ist, eine Drehzahländerungsgeschwindigkeit des Hilfsgetriebemechanismus (30) mit dem stufenlosen Getriebemechanismus (20) koordiniert wird und der stufenlose Getriebemechanismus (20) gesteuert wird, eine Drehzahländerung in eine Richtung entgegengesetzt zu derjenigen des Hilfsgetriebemechanismus (30) auszuführen, während der Drehzahländerungsvorgang des Hilfsgetriebemechanismus (30) ausgeführt wird;
wobei die Steuerungsvorrichtung **gekennzeichnet ist durch**:
einen Drehmomentsteuerungsabschnitt (12b), der ausgebildet ist, eine Drehmomentregelungssteuerung während der koordinierten Drehzahländerung beim Hochschalten des Hilfsgetriebemechanismus (30) **durch** den Abschnitt zur koordinierten Drehzahländerung (12a) auszuführen, wobei die Drehmomentregelungssteuerung eine Steuerung zur Bewirkung eines Vorgangs zur Erhöhung des Drehmoments an der Antriebsquelle (1) ist, nachdem ein Vorgang zur Absenkung des Drehmoments an der Antriebsquelle (1) bewirkt wird, und eine Zeitsteuerung beinhaltet, **durch** welche ein Startzeitpunkt einer Antriebskraftunterbrechung, die auch als Abfall der Antriebskraft bezeichnet wird und **durch** die koordinierte Drehzahländerung hervorgerufen wird, vorwärts verschoben wird, und ferner eine Zeitsteuerung beinhaltet, **durch** welche ein Endzeitpunkt der Antriebskraftunterbrechung verzögert wird.

2. Steuerungsvorrichtung für ein stufenloses Getriebe (4) nach Anspruch 1, in der:
der Abschnitt zur koordinierten Drehzahländerung (12a) ausgebildet ist, die koordinierte Drehzahländerung auszuführen, indem der Vorgang des Hochschaltens so ausgeführt wird, dass er eine vorbereitende Phase, eine Drehmomentphase, eine Trägheitsphase und eine Endphase in dieser Reihenfolge aufweist; und
der Drehmomentsteuerungsabschnitt (12b) ausgebildet ist, die Drehmomentregelungssteuerung in einer Zeitphase auszuführen, die aus der vorbereitenden Phase und der Drehmomentphase besteht, und ferner ausgebildet ist, die Drehmomentregelungssteuerung in einer Zeitphase auszuführen, die aus der Trägheitsphase und der Endphase besteht.

3. Steuerungsvorrichtung für ein stufenloses Getriebe (4) nach Anspruch 2, in der:
der Drehmomentsteuerungsabschnitt (12b) ausgebildet ist, einen Betrag der Drehmomentabsenkung der Antriebsquelle (1) so zu steuern, dass der Betrag einen Wert annimmt, der gleich oder größer als 0 (null) an dem Zeitpunkt ist, an welchem der Übergang von der Drehmomentphase zu der Trägheitsphase erfolgt.

4. Steuerungsvorrichtung für ein stufenloses Getriebe (4) nach Anspruch 2 oder 3, in der:
der Drehmomentsteuerungsabschnitt (12b) ausgebildet ist, den Betrag der Drehmomentabsenkung so zu steuern, dass er einen Wert von 1 (eins) an dem Zeitpunkt annimmt, an welchem der Übergang von der vorbereitenden Phase in die Drehmomentphase erfolgt.

5. Steuerungsvorrichtung für ein stufenloses Getriebe (4) nach einem der Ansprüche 2 des 4, in der:
der Drehmomentsteuerungsabschnitt (12b) ausgebildet ist, die Drehmomentregelungssteuerung an dem Zeitpunkt zu beginnen, an welchem seit dem Zeitpunkt des Übergangs zur Trägheitsphase eine vorgegebene Zeitdauer verstrichen ist.

## Revendications

1. Dispositif de commande pour une transmission à variation continue (4) qui comprend un mécanisme de transmission à variation continue du type à courroie (20) qui est configuré pour faire varier en continu une vitesse de rotation donnée à partir d'une source d'entraînement (1), et un mécanisme de transmission auxiliaire (30) qui est un mécanisme de transmission variable par étapes qui est connecté en série au mécanisme de transmission à variation continue (20) et a comme étages de changement de vitesse en marche avant un premier étage de changement de vitesse (32), et un second étage de changement de vitesse (33) dont le rapport de changement de vitesse est inférieur à celui du premier étage de changement de vitesse (32),
le dispositif de commande comprenant en outre :
une section de changement de vitesse coordonnée (12a) qui est configurée pour effectuer un changement de vitesse coordonné de telle sorte que lorsque l'étage de changement de vitesse du mécanisme de transmission auxiliaire (30) est sur le point d'être modifié, une vitesse de changement de vitesse du mécanisme de transmission auxiliaire (30) est coordonnée avec le mécanisme de transmission à variation continue (20), et le mécanisme de transmission à variation continue (20) est commandé pour effectuer un changement de vitesse dans une direction opposée à celle du mécanisme de transmission auxiliaire (30) en effectuant l'opération de changement de vitesse du mécanisme de transmission auxiliaire (30) ;
le dispositif de commande (10) étant **caractérisé par** :
une section de commande de couple (12b) qui est configurée pour exécuter une commande de régulation de couple pendant le changement de vitesse coordonné sous décalage vers le haut du mécanisme de transmission auxiliaire (30) par la section de changement de vitesse coordonné (12a), la commande de régulation de couple étant une commande pour effectuer une opération d'augmentation couple vers la source d'entraînement (1) après avoir effectué une opération de réduction de couple vers la source d'entraînement (1), et comprenant un synchronisation via laquelle un point de temps de démarrage d'un intervalle de force d'entraînement, également désigné par chute de force d'entraînement, provoqué par le changement de vitesse coordonné est avancé, et une synchronisation via laquelle un point de fin de l'intervalle de force d'entraînement est retardé.

2. Dispositif de commande pour une transmission à variation continue (4) selon la revendication 1, dans lequel :
la section de changement de vitesse coordonné (12a) est configurée pour effectuer la modification de vitesse coordonnée en amenant l'opération de décalage vers le haut à subir une phase préparatoire, une phase de couple, une phase d'inertie et une phase de fin dans l'ordre ; et
la section de commande de couple (12b) est configurée pour exécuter la commande de régulation de couple dans une période comprenant la phase préparatoire et la phase de couple, et est configurée pour effectuer la commande de régulation de couple dans une période comprenant la phase d'inertie et la phase de fin.

3. Dispositif de commande pour une transmission à variation continue (4), selon la revendication 2, dans lequel :
la section de commande de couple (12b) est configurée pour commander une quantité de réduction de couple de la source d'entraînement (1) pour prendre une valeur égale ou supérieure à 0 (zéro) au moment où la phase est décalée de la phase de couple jusqu'à la phase d'inertie.

4. Dispositif de commande pour une transmission à variation continue (4), selon la revendication 2 ou 3, dans lequel :
la section de commande de couple (12b) est configurée pour commander une quantité de réduction de couple pour prendre une valeur de 1 (un) au moment où la phase est décalée de la phase préparatoire jusqu'à la phase de couple.

5. Dispositif de commande pour une transmission à variation continue (4), selon l'une quelconque des revendications 2 à 4, dans lequel :
la section de commande de couple (12b) est configurée pour démarrer la commande de régulation de couple au moment où un temps donné passe du moment de décalage à la phase d'inertie.
